# FASCICULE DE BREVET EUROPEEN

(11) **EP 2 807 717 B1**
(45) Date de publication et mention de la délivrance du brevet: **09.09.2015**
(21) Numéro de dépôt: 13701850.3
(22) Date de dépôt: 09.01.2013
(51) Int. Cl.: H02J 7/00, B60R 16/03

(54) **PROCÉDÉ DE GESTION DE L'ÉNERGIE ÉLECTRIQUE D'UNE ARCHITECTURE ÉLECTRIQUE D'UN VÉHICULE AUTOMOBILE ET VÉHICULE AUTOMOBILE METTANT EN OEUVRE UN TEL PROCÉDÉ**
VERFAHREN ZUR VERWALTUNG DER ELEKTRISCHEN ENERGIE EINER ELEKTRISCHEN ARCHITEKTUR EINES KRAFTFAHRZEUGS UND KRAFTFAHRZEUG MIT EINEM SOLCHEN VERFAHREN
METHOD FOR MANAGING THE ELECTRICAL ENERGY OF AN ELECTRICAL ARCHITECTURE OF A MOTOR VEHICLE, AND MOTOR VEHICLE IMPLEMENTING SUCH A METHOD

(30) Priorité: 26.01.2012 FR 1250750
(43) Date de publication de la demande: 03.12.2014
(73) Titulaire: Peugeot Citroën Automobiles SA, 78140 Vélizy Villacoublay (FR)
(72) Inventeur: COMTE, Raphael, 77380 Combs La Ville (FR); BELKHIRI, Abdeslam, 92110 Clichy (FR); BOUCLY, Bernard, 78150 Le Chesnay (FR)
(86) Numéro de dépôt international: PCT/FR2013/050044
(87) Numéro de publication internationale: WO 2013/110869

(56) Documents cités:
- DE-A1- 10 309 322
- DE-A1-102006 051 588
- DE-A1-102007 029 025
- DE-A1-102008 005 847
- FR-A1- 2 945 996
- US-A1- 2004 148 075
- US-A1- 2010 289 336

## Description

### Domaine technique de l'invention

La présente invention se rapporte à un procédé de gestion de l'énergie électrique d'une architecture électrique d'un véhicule automobile.

L'invention porte aussi sur un véhicule automobile mettant en oeuvre un tel procédé.

### Arrière-plan technologique

Certains réseaux électriques de véhicule automobile comprennent un alternateur et un stockeur d'énergie électrique (comme par exemple une batterie traditionnelle au plomb 12V pour automobile), qui sont chargés d'alimenter en tension un ou plusieurs organes électriques de façon permanente ou commutée. C'est par exemple le cas des réseaux de bord de véhicule (éventuellement automobile), cf. US 2010/0289336 A ou FR 2945996 A.

Dans une architecture électrique classique, le fait que le stockeur d'énergie électrique soit en permanence connecté à l'alternateur et au réseau de bord impose une forte dépendance sur les échanges énergétiques. Il en résulte qu'en cas de perte de la fonction de production d'électricité due à une défaillance de l'alternateur, le réseau de bord a alors comme générateur la batterie. La réserve d'énergie de la batterie étant limitée l'autonomie est réduite et la tension de la batterie peut être rapidement insuffisante pour assurer la qualité du réseau de bord, c'est-à-dire la tension minimum requise au bon fonctionnement des organes électriques du réseau de bord activés.

Il existe donc un besoin pour assurer la qualité du réseau de bord en cas de défaillance de l'alternateur.

L'invention porte ainsi sur un procédé de gestion de l'énergie électrique d'une architecture électrique d'un véhicule automobile comprenant un stockeur d'énergie électrique, un réseau de bord comprenant un organe électrique activé, un générateur, un convertisseur DC/DC comprenant une entrée reliée au stockeur d'énergie électrique ainsi qu'une sortie reliée au réseau de bord et au générateur, des moyens de contrôle permettant de piloter le convertisseur DC/DC ainsi que le générateur, procédé caractérisé en ce que l'on vérifie si le générateur est défaillant et lorsque le générateur est jugé défaillant, on pilote le convertisseur DC/DC de sorte à fournir un courant en provenance du stockeur vers le réseau de bord et une tension minimale de fonctionnement de l'organe électrique activé du réseau de bord.

De préférence, dans le cas où le réseau de bord comprenant plusieurs organes électriques activés, la tension minimale de fonctionnement du réseau de bord est imposée par l'organe électrique activé requérant la tension minimum de bon fonctionnement la plus élevée.

Dans une variante, la défaillance du générateur est identifiée par une information issue dudit générateur.

Dans une autre variante, la défaillance du générateur est identifiée par une information issue du réseau de bord.

De préférence, lorsque le générateur est jugé défaillant, l'on vérifie préalablement si un apport électrique est nécessaire au maintien en fonctionnement d'une prestation sécuritaire du réseau de bord.

De préférence encore, la consommation électrique du réseau de bord est réduite par l'arrêt ou la réduction de puissance d'une prestation électrique non sécuritaire.

Dans une variante, convertisseur DC/DC est piloté en mode passant si la tension minimale de fonctionnement du réseau de bord est sensiblement égale la tension à vide du stockeur.

De préférence, le procédé est actif quand le moteur est tournant.

### Brève description des dessins

D'autres particularités et avantages apparaîtront à la lecture de la description ci-après d'un mode particulier de réalisation, non limitatif de l'invention, faite en référence aux figures dans lesquelles :
- La figure 1 est une représentation schématique d'un véhicule automobile équipé d'une architecture électrique destinée à mettre en oeuvre le procédé de l'invention.
- La figure 2 est une représentation schématique d'un logigramme du procédé de l'invention.

### Description détaillée

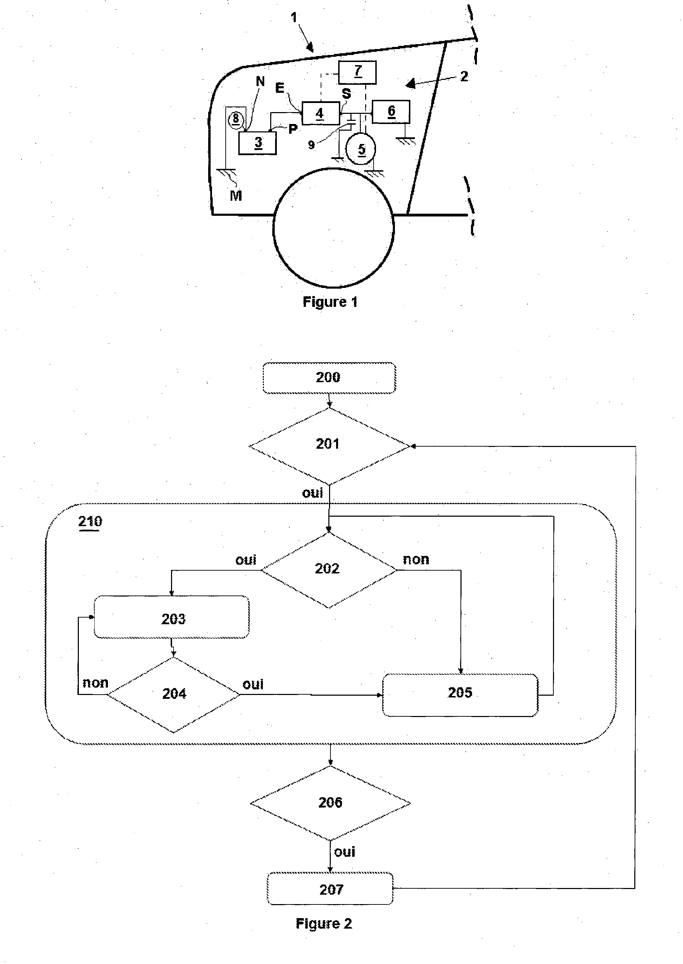

La figure 1 présente un véhicule automobile 1 équipé d'une architecture électrique 2 comprenant un réseau de bord 6 alimenté en courant continu. Le réseau de bord 6 regroupe des organes électriques se comportant comme des charges dans le véhicule, et tolérant des variations de tension d'alimentation dans une certaine plage, par exemple entre 10,5 V et 16 V, comme par exemple l'éclairage du véhicule, un ordinateur de bord, un groupe de climatisation lorsque celui-ci est alimenté électriquement ou encore requérant une tension minimum de bon fonctionnement, Uminbf, cette tension minimum de bon fonctionnement n'étant pas nécessairement la même d'un organe électrique à un autre. Ainsi, selon les organes électriques activés, la valeur de tension minimale, Umin, de fonctionnement du réseau de bord 6 peut varier : l'organe électrique activé requérant la tension minimum de bon fonctionnement, Uminbf, la plus élevée, impose alors la valeur de tension minimale, Umin, de fonctionnement du réseau de bord 6.

L'architecture électrique 2 comprend également un générateur 5 à tension de consigne continue modulable, comme par exemple un alternateur 5 piloté dont la tension de consigne, U_{consAlt}, lorsque celui-ci est en fonctionnement, est comprise entre un seuil minimum, par exemple de 12 V, et un seuil maximum, par exemple de 15 V. L'alternateur 5 délivre un courant continu. A cet effet, il comprend des moyens de redressement du courant. La tension de consigne de l'alternateur 5 est adaptée à la tension requise par le réseau de bord 6 pour son bon fonctionnement. L'alternateur 5 est directement relié au réseau de bord 6. Un condensateur de filtrage 9 peut avantageusement être placé en parallèle de l'alternateur 5. Pour des raisons de compromis entre son coût et sa puissance, de préférence, la capacité de production électrique de l'alternateur 5 est choisie inférieure au besoin électrique maximum requis par le réseau de bord 6.

L'architecture électrique 2 comprend encore un stockeur d'énergie électrique comme par exemple une batterie 3 très basse tension, telle qu'une batterie dite 12V au plomb. La tension que peut délivrer la batterie 3 est dépendante de son état de charge. Classiquement, la tension que peut délivrer la batterie 3 est comprise entre une tension minimum de l'ordre de 11,8 V lorsque son état de charge est faible, autrement dit environ 0% et une tension maximum de l'ordre de 12,8V pour une batterie dite de 12V, lorsque son état de charge est élevé, soit proche de 100%.

L'architecture électrique 2 comprend également un convertisseur continu/continu 4 (encore désigné ici comme convertisseur DC/DC) permettant d'alimenter le réseau de bord 6 à partir de la batterie 3. Le convertisseur continu/continu 4 comprend une borne d'entrée E et une borne de sortie S. La borne d'entrée est raccordée à une borne positive P de la batterie 3. La batterie 3 comprend une borne négative N raccordée à une masse électrique M. La batterie 3 peut également être équipée d'un dispositif 8 disposé sur la borne négative N permettant de mesurer son état de charge. Le réseau de bord 6 est raccordé entre la borne de sortie S et la borne négative N de la batterie 3 par l'intermédiaire de la masse électrique M. L'alternateur 5 est aussi raccordé entre la borne de sortie S et la borne négative N de la batterie 3 par l'intermédiaire de la masse électrique M.

L'architecture électrique 2 comprend de plus des moyens de contrôle 7 assurant le pilotage du convertisseur DC/DC 4 et de l'alternateur 5.

Le convertisseur DC/DC 4 comprend au moins les modes de fonctionnement suivants :
- un mode passant : le convertisseur DC/DC 4 se comporte comme un interrupteur fermé,
- un mode ouvert : le convertisseur DC/DC 4 se comporte comme un interrupteur ouvert,
- un mode élévateur ou abaisseur de tension de la sortie S par rapport à l'entrée E pour un courant circulant dans le convertisseur DC/DC 4 de l'entrée E vers la sortie S, ce qui permet de fournir du courant en provenance de la batterie 3 au réseau de bord 6.

Le convertisseur DC/DC 4 peut être un convertisseur DC/DC réversible, auquel cas il comprend aussi le mode de fonctionnement suivant :
- un mode élévateur ou abaisseur de tension de l'entrée E par rapport à la sortie S pour un courant circulant dans le convertisseur DC/DC 4 de la sortie S vers l'entrée E, ce qui permet d'envoyer du courant vers la batterie et de la recharger.

Ces modes de fonctionnement permettent d'obtenir à volonté une tension coté batterie égale ou différente de la tension coté réseau de bord.

Ces modes de fonctionnement autorisent une gestion optimisée de l'énergie électrique de l'architecture électrique 2. Avec cette nouvelle gestion l'énergie électrique de l'architecture électrique 2, l'ensemble constitué de la batterie 3 et du convertisseur DC/DC 4 peut être utilisé en générateur d'énergie électrique en complément de l'alternateur 5 déjà présent dans le véhicule 1. Le réseau de bord 6 est alors alimenté par deux sources d'énergie électriques indépendantes. L'ensemble constitué de la batterie 3 et du convertisseur DC/DC 4 peut aussi être utilisé en générateur d'énergie électrique principal, en remplacement de l'alternateur 5, notamment en cas d'identification d'une défaillance de l'alternateur 5.

La figure 2 présente un logigramme de la procédure de l'invention dans lequel les étapes 200 et 207 correspondent respectivement aux étapes d'entrée et de sortie de ladite procédure. La procédure est réalisée en boucle afin de s'actualiser en fonction de l'évolution de la situation de vie du véhicule.

A L'étape 201 on vérifie si l'alternateur 5 est défaillant. Si l'alternateur 5 est jugé défaillant alors on passe à l'étape 210 dans laquelle on applique les mesures permettant de compenser la défaillance de l'alternateur 5.

La défaillance de l'alternateur peut être identifiée à partir d'une information issue de l'alternateur 5 lui-même. Dans ce cas, l'information, qui provient directement de l'alternateur 5, est fiable et rapide à déterminer, ce qui évite par ailleurs d'ajouter des composants par exemple de mesure de courant. Dans le cas où l'information n'est pas disponible directement à partir de l'alternateur 5, la défaillance de l'alternateur peut encore être identifiée à partir d'information issue du réseau de bord 6, par mesure de courant en sortie d'alternateur 5. Il peut aussi être envisagé de d'utiliser une information issue de l'alternateur 5 et de confirmer par une information issue du réseau de bord 6 ou par une mesure de courant.

Dans le cas où l'information provient d'une mesure de courant, l'alternateur 5 est par exemple jugé défaillant si momentanément il ne débite plus de courant pendant une période déterminée ,par exemple d'une seconde.

A l'étape 201 l'ensemble constitué de la batterie 3 et du convertisseur DC/DC 4 sont utilisés pour supplanter l'alternateur 5 défaillant et fournir du courant au réseau de bord 6 de sorte à garantir au mieux la qualité du réseau de bord.

Dans cette situation, l'autonomie en temps d'utilisation de la batterie 3 est importante, aussi, afin d'avoir une décharge plus lente de la batterie 3 et donc d'augmenter l'autonomie en temps d'utilisation, l'étape 201 comprend une étape 205 dans laquelle le convertisseur DC/DC 4 est piloté de sorte à réduire au maximum la consommation du réseau de bord 6.

Le convertisseur DC/DC 4 est ainsi de préférence piloté dans le mode permettant de fournir un courant en provenance de la batterie 3 vers le réseau de bord 6 pour alimenter l'ensemble des organes électriques activés du réseau de bord 6, et garantir la tension minimale, Umin, de fonctionnement des organes électriques activés du réseau de bord 6.

On utilise le convertisseur DC/DC 4 en générateur de courant régulé en tension, en remplacement de l'alternateur 5. On détermine ainsi pour le convertisseur DC/DC 4 une consigne de courant, Imax, correspondant de préférence au courant maximum que peut fournir le convertisseur DC/DC 4 (par exemple 200 A). Ce courant maximum est défini par le dimensionnement technique du convertisseur DC/DC 4. On détermine aussi une consigne de tension, U_{ConsDC} à la sortie S du convertisseur DC/DC 4 égale à la valeur de tension minimale, Umin. Les moyens de contrôle 7 pilotent ensuite le convertisseur DC/DC 4 aux consignes déterminées.

Afin d'augmenter encore l'autonomie en temps d'utilisation de la batterie 3, la consommation électrique du réseau de bord 6 peut par ailleurs être réduite par l'arrêt de prestations électriques non sécuritaires ou la réduction de leur puissance consommée.

Afin d'optimiser la décharge de la batterie 3, il faut privilégier une tension U_{ConsDC} inférieure à la tension à vide de la batterie 3, U_{bat0}, de façon à réduire le courant prélevé par le réseau de bord 6. Par ailleurs si la tension minimale, Umin, est sensiblement égale la tension à vide de la batterie 3, U_{bat0}, le convertisseur DC/DC 4 peut être piloté plus simplement en utilisant le mode passant.

On peut ainsi ajuster Umin à la tension à vide de la batterie 3, U_{bat0}, en réduisant la consommation électrique du réseau de bord 6 et simplifier le pilotage du convertisseur DC/DC 4 par un pilotage en mode passant.

Avantageusement, l'étape 201 peut aussi prévoir de vérifier si un apport électrique est nécessaire afin de garantir le bon fonctionnement d'une prestation sécuritaire. En effet, l'activation d'un organe électrique sécuritaire en particulier de forte puissance entraîne momentanément une brutale chute de tension sur le réseau de bord 6. Cette chute de tension peut entraîner un fonctionnement dégradé d'une prestation électrique voire une perte de la fonction.

Parmi les principaux organes électriques considérés comme sécuritaires autrement dont le dysfonctionnement engage la sécurité des passagers du véhicule, on peut citer la direction assistée, le correcteur électronique de trajectoire, l'antiblocage de sécurité, le freinage d'urgence. Ces organes sécuritaires sont dits de forte puissance car ils ont un besoin de puissance important pouvant atteindre 1kW électrique. D'autres organes électriques tel que l'éclairage extérieur du véhicule sont aussi considérés comme sécuritaires mais n'ont pas besoin de forte puissance. Parmi les principaux organes électriques considérés comme non sécuritaires, on peut citer par exemple l'éclairage intérieur du véhicule, l'ordinateur de bord, le groupe de climatisation.

Dans ce cas il est prévu une étape 202, qui préalablement à l'étape 201, vérifie si un apport électrique est nécessaire pour le maintien en fonctionnement d'une prestation sécuritaire du réseau de bord. Une information relative à l'activation effective d'un organe électrique sécuritaire peut suffire à savoir si le réseau de bord 6 est sujet à une chute de tension si on admet que son activation implique systématiquement une chute de tension au niveau du réseau de bord. Il peut s'agir d'un seuil de tension de réseau de bord atteint.

Dans l'affirmative, on passe à l'étape 203 dans laquelle applique les mesures permettant le maintien en bon fonctionnement de la prestation sécuritaire.

Ainsi pour le convertisseur DC/DC 4, on détermine pour le convertisseur DC/DC 4 :
- une consigne de courant maximum, Iₘₐₓ, correspondant de préférence au courant maximum que peut fournir le convertisseur DC/DC 4.
- une consigne de tension, U_{ConsDC}, à la sortie S du convertisseur DC/DC 4 correspondant à la tension permettant de garantir le fonctionnement de l'organe sécuritaire.

Les moyens de contrôle pilotent ensuite le convertisseur DC/DC 4 à la consigne de courant maximum Iₘₐₓ, et à la consigne de tension, U_{ConsDC} déterminées.

A L'étape 204 on vérifie la nécessité de poursuivre la procédure entamée à l'étape 203

Si l'apport en courant n'est plus jugé nécessaire (branche OUI à l'étape 204) alors on passe à l'étape 205, sinon on poursuit l'étape 203.

A l'étape 206 on vérifie s'il n'y a plus de défaillance ou s'il y a une coupure du moteur. S'il n'y a plus de défaillance ou s'il y a une coupure du moteur on passe à l'étape 207 de sortie de procédure, sinon on reste dans l'étape 201.

L'étape 201 peut être réalisée jusqu'à la décharge complète de la batterie 3.

L'invention permet d'améliorer la qualité des prestations du véhicule car le surplus d'énergie apporté par l'ensemble batterie 3 - convertisseur DC/DC 4 formant le second générateur permet de maintenir provisoirement au mieux les prestations du réseau de bord en cas de défaillance du générateur principal et ainsi d'éviter une coupure de prestations sécuritaires ou de conforts (par exemple coupure de fonction de confort thermique de l'habitacle du véhicule).

Dans une variante, l'alternateur 5 peut être remplacé par un autre générateur à tension de régulation continue et modulable entre une tension de consigne minimum et une tension de consigne maximum, du type convertisseur de courant DC/DC ou encore un alterno-démarreur.

Dans une autre variante, le stockeur d'énergie électrique peut également être du type condensateur ou supercondensateur.

## Revendications

1. Procédé de gestion de l'énergie électrique d'une architecture électrique (2) d'un véhicule automobile (1) comprenant un stockeur d'énergie électrique (3), un réseau de bord (6) comprenant un organe électrique activé, un générateur (5), un convertisseur DC/DC (4) comprenant une entrée (E) reliée au stockeur d'énergie électrique (3) ainsi qu'une sortie (S) reliée au réseau de bord (6) et au générateur (5), des moyens de contrôle (7) permettant de piloter le convertisseur DC/DC (4) ainsi que le générateur (5), procédé **caractérisé en ce que** l'on vérifie si le générateur (5) est défaillant et lorsque le générateur (5) est jugé défaillant, on pilote le convertisseur DC/DC (4) de sorte à fournir un courant en provenance du stockeur (3) vers le réseau de bord (6) et une tension minimale (Umin) de fonctionnement de l'organe électrique activé du réseau de bord (6).

2. Procédé selon la revendication 1, **caractérisé en ce que** le réseau de bord comprenant plusieurs organes électriques activés, la tension minimale (Umin) de fonctionnement du réseau de bord (6) est imposée par l'organe électrique activé requérant la tension minimum de bon fonctionnement (Uminbf) la plus élevée.

3. Procédé selon la revendication 1 ou la revendication 2, **caractérisé en ce que** la défaillance du générateur (5) est identifiée par une information issue dudit générateur (5).

4. Procédé selon l'une quelconque des revendications précédentes, **caractérisé en ce que** la défaillance du générateur (5) est identifiée par une information issue du réseau de bord (6).

5. Procédé selon l'une quelconque des revendications précédentes, **caractérisé en ce que** lorsque le générateur (5) est jugé défaillant, l'on vérifie préalablement si un apport électrique est nécessaire au maintien en fonctionnement d'une prestation sécuritaire du réseau de bord (6).

6. Procédé selon l'une quelconque des revendications précédentes, **caractérisé en ce que** la consommation électrique du réseau de bord (6) est réduite par l'arrêt ou la réduction de puissance d'une prestation électrique non sécuritaire.

7. Procédé selon l'une quelconque des revendications précédentes, **caractérisé en ce que** le convertisseur DC/DC (4) est piloté en mode passant si la tension minimale (Umin) de fonctionnement du réseau de bord (6) est sensiblement égale la tension à vide (U_{bat0}) du stockeur (3).

8. Procédé selon l'une quelconque des revendications précédentes, **caractérisé en ce qu'**il est actif quand le moteur est tournant.

## Patentansprüche

1. Verfahren zur Verwaltung der elektrischen Energie einer elektrischen Architektur (2) eines Kraftfahrzeugs (1), das einen Speicher elektrischer Energie (3), ein Bordnetzwerk (6), das ein aktiviertes elektrisches Organ umfasst, einen Generator (5) einen Gleichstrom-Gleichstrom-Wandler (4), der einen Eingang (E) umfasst, der mit dem Speicher elektrischer Energie (3) verbunden ist, sowie einen Ausgang (S), der mit dem Bordnetzwerk (6) und mit dem Generator (5) verbunden ist, Steuermittel (7), die das Steuern des Gleichstrom-Gleichstrom-Wandlers (4) sowie des Generators (5) erlauben, umfasst, Verfahren **dadurch gekennzeichnet, dass** geprüft wird, ob der Generator (5) versagt hat, und, wenn der Generator (5) als versagt befunden wird, der Gleichstrom-Gleichstrom-Wandler (4) derart gesteuert wird, dass ein Strom, der von dem Speicher (3) stammt, zu dem Bordnetzwerk (6) und eine Betriebsmindestspannung (Umin) des aktivierten elektrischen Organs des Bordnetzwerks (6) geliefert werden.

2. Verfahren nach Anspruch 1, **dadurch gekennzeichnet, dass** das Bordnetzwerk mehrere aktivierte elektrische Organe umfasst, wobei die Betriebsmindestspannung (Umin) des Bordnetzwerks (6) von dem elektrisch aktivierten Organ, das die höchste Mindestbetriebsspannung (Uminbf) fordert, auferlegt wird.

3. Verfahren nach Anspruch 1 oder 2, **dadurch gekennzeichnet, dass** das Versagen des Generators (5) durch eine Information, die aus dem Generator (5) stammt, identifiziert wird.

4. Verfahren nach einem der vorhergehenden Ansprüche, **dadurch gekennzeichnet, dass** das Versagen des Generators (5) durch eine Information, die aus dem Bordnetzwerk (6) stammt, identifiziert wird.

5. Verfahren nach einem der vorhergehenden Ansprüche, **dadurch gekennzeichnet, dass**, wenn der Generator (5) als versagt befunden wird, zuvor geprüft wird, ob ein elektrischer Zusatz zum Aufrechterhalten des Betriebs eines Sicherheitsservice des Netzwerks (6) erforderlich ist.

6. Verfahren nach einem der vorhergehenden Ansprüche, **dadurch gekennzeichnet, dass** der Stromverbrauch des Bordnetzwerks (6) durch das Stoppen oder die Verringerung der Leistung eines elektrischen Service, der kein Sicherheitsservice ist, verringert wird.

7. Verfahren nach einem der vorhergehenden Ansprüche, **dadurch gekennzeichnet, dass** der Gleichstrom-Gleichstrom-Wandler (4) im durchgehenden Modus gesteuert wird, falls die Betriebsmindestspannung (Umin) des Bordnetzwerks (6) im Wesentlichen gleich der Leerlaufspannung (U_{bat0}) des Speichers (3) ist.

8. Verfahren nach einem der vorhergehenden Ansprüche, **dadurch gekennzeichnet, dass** es aktiv ist, wenn der Motor dreht.

## Claims

1. A method for managing the electrical energy of an electrical architecture (2) of a motor vehicle (1) comprising an electrical energy storage system (3), an on-board network (6) comprising an activated electrical member, a generator (5), a DC/DC converter (4) comprising an input (E) connected to the electrical energy storage system (3) and an output (S) connected to the on-board network (6) and to the generator (5), and control means (7) in order to control the DC/DC converter (4) and the generator (5), said method being **characterized in that** the generator (5) is checked for malfunctions, and when the generator (5) is considered to be malfunctioning, the DC/DC converter (4) is controlled in such a way as to supply a current from the storage system (3) to the on-board network (6) and a minimum operating voltage (Umin) of the activated electrical member of the on-board network (6).

2. The method according to claim 1, **characterized in that** the on-board network including several activated electrical members, the minimum operating voltage (Umin) of the on-board network (6) is imposed by the activated electrical member requiring the highest minimum good operating voltage (Uminbf).

3. The method according to claim 1 or 2, **characterized in that** the malfunctioning of the generator (5) is identified by information issued from the said generator (5).

4. The method according to any one of the preceding claims, **characterized in that** the malfunctioning of the generator (5) is identified by information issued from the on-board network (6).

5. The method according to any one of the preceding claims, **characterized in that** when the generator (5) is considered to be malfunctioning, previously a check is made if an electrical input is necessary for maintaining in operation a security service of the on-board network (6).

6. The method according to any one of the preceding claims, **characterized in that** the electrical consumption of the on-board network (6) is reduced by the stopping or the reduction of power of a non-secruity electrical service.

7. The method according to any one of the preceding claims, **characterized in that** the DC/DC converter (4) is driven in pass-through mode if the minimum operating voltage (Umin) of the on-board network (6) is substantially equal to the open circuit voltage (U_{bat0}) of the storage system (3).

8. The method according to any one of the preceding claims, **characterized in that** it is active when the engine is running.
